# EUROPÄISCHE PATENTANMELDUNG

(11) **EP 4 299 965 A1**
(43) Veröffentlichungstag der Anmeldung: **03.01.2024**
(21) Anmeldenummer: 23177424.1
(22) Anmeldetag: 05.06.2023
(51) Int. Cl.: F16L 59/14, B23B 51/04

(54) **VERFAHREN UND VORRICHTUNG ZUM ENTFERNEN DER ISOLATIONSSCHICHT VON FERNWÄRMEROHREN**

(30) Priorität: 28.06.2022 DE 102022115991
(71) Anmelder: ArmEx Solutions GmbH, 22844 Norderstedt (DE)
(72) Erfinder: Siemsen, Richard, 22926 Siek (DE); Hentzgen, Ronald, 25355 Barmstedt (DE)
(74) Vertreter: Jaeschke, Rainer

(57) **Zusammenfassung**

Die Erfindung betrifft ein Verfahren und eine Vorrichtung zum Entfernen der Isolationsschicht von Fernwärmerohren, welche Isolationsschicht wenigstens ein Innenrohr umgibt. Gemäß der Erfindung wird vorgeschlagen, dass die Isolationsschicht in einer vorgegebenen Länge von einem freien Ende des Fernwärmerohrs mit einem Schnitt senkrecht zur Achse des Fernwärmerohrs von der restlichen Isolationsschicht abgetrennt wird, dass die Isolationsschicht ausgehend von dem freien Ende des Fernwärmerohrs mit einem hülsenförmigen Bohrmaschinenaufsatz, dessen lichter Innendurchmesser geringfügig größer ist als der Außendurchmesser des Innenrohrs, von dem Innenrohr über die vorgegebene Länge getrennt wird, und dass der entstandene ringförmige Isolationsschichtabschnitt von dem Innenrohr abgezogen wird.

## Beschreibung

Die Erfindung betrifft ein Verfahren zum Entfernen der Isolation oder Isolationsschicht von Fernwärmerohren, welche Isolationsschicht wenigstens ein Innenrohr umgibt. Weiterhin betrifft die Erfindung eine Vorrichtung insbesondere zum Durchführen des Verfahrens.

Vorisolierte Fernwärmerohre weisen ein Innenrohr oder Leitungsrohr aus Metall, beispielsweise aus Stahl, Kupfer oder Messing auf, das von einer Polyurethan-Schicht umgeben ist, die ihrerseits von einem Mantelrohr aus Kunststoff, beispielsweise aus Polyethylen, umhüllt ist. Bei Arbeiten an verlegten Rohren oder zum Verlegen der Rohre müssen die freien Enden der Stahlrohre von der Isolationsschicht vollständig befreit werden, damit die verwendeten Rohrfittings zum Verbinden zweier Rohrenden oder zum Einsetzen von Anschlussstücken dicht mit den Rohrenden verbunden werden können. Grundsätzlich können in einem Fernwärmerohr auch zwei oder mehrere Leitungsrohre oder Innenrohre parallel nebeneinander verlaufen.

Für das Verbinden von Rohren können diese miteinander verschweißt werden. Dies setzt ebenfalls eine saubere Oberfläche der Rohrenden voraus. Auch können sogenannte Pressverbindungen eingesetzt werden, die eine dichte Verbindung von Rohrstücken ohne Schweißarbeiten ermöglichen. Eine derartiges Pressfitting ist beispielsweise aus der EP 3 404 303 A1 bekannt. Auch hier ist es erforderlich, dass die Oberflächen der Rohrenden sauber und frei von Rückständen sind, um eine dauerhaft dichte Verbindung zu gewährleisten. Hierfür ist es zunächst erforderlich, die Isolationsschicht von dem Innenrohr zu entfernen.

Häufig werden die Fernwärmerohre im verlegten Zustand bearbeitet. Dafür wird das Erdreich an der gewünschten Stelle entfernt und das Rohr aufgetrennt. Die äußere Polyethylenhülle oder das Mantelrohr wird axial aufgeschnitten und entfernt. Anschließend wird die Isolationsschicht per Hand oder mit einem Winkelschleifer abgeschliffen. Die Rückstände fallen in die Grube und werden in der Regel nicht ordnungsgemäß entsorgt. Auch ist das Abschleifen der Rohrenden unter den beengten Raumverhältnissen mit einiger Geschicklichkeit und auch mit einem hohen Zeitaufwand verbunden. Insbesondere ist das freizulegende Rohrende von unten nur schwer zugänglich, so dass dort die Isolationsschicht häufig nicht vollständig entfernt werden kann.

Der Erfindung liegt die Aufgabe zugrunde, ein Verfahren und eine Vorrichtung bereitzustellen, mit dem beziehungsweise der ein Entfernen der Isolationsschicht von solchen Fernwärmerohren schnell und sauber möglich ist.

Die Aufgabe wird gemäß der Erfindung dadurch gelöst, dass die Isolationsschicht in einer vorgegebenen Länge von einem freien Ende des Fernwärmerohrs mit einem Schnitt senkrecht zur Achse des Fernwärmerohrs von der restlichen Isolationsschicht abgetrennt wird, dass die Isolationsschicht ausgehend von dem freien Ende des Fernwärmerohrs mit einem hülsenförmigen Bohrmaschinenaufsatz, dessen lichter Innendurchmesser geringfügig größer ist als der Außendurchmesser des Innenrohrs, über die vorgegebene Länge unter Erzeugung eines ringförmigen Spalts zwischen dem äußeren Umfang des Innenrohrs und der dieses umgebenden Isolationsschicht von dem Innenrohr getrennt wird, und dass der entstandene ringförmige Isolationsschichtabschnitt von dem Innenrohr abgezogen wird. Durch das Verfahren ist es möglich, die Isolationsschicht an einem Stück von dem freizulegenden Rohrende zu entfernen. Es fallen kaum Abfallspäne an, die aufwändig aufgefangen und entsorgt werden müssen. Weiterhin wird das Rohrende nahe zu und entlang dem gesamten Umfang von der Isolationsschicht getrennt. Auch müssen das Mantelrohr oder die Polyethylenhülle nicht vorher entlang dem freizulegenden Rohrende entfernt werden.

Im Einzelnen wird durch den hülsenförmigen Bohrmaschinenaufsatz ein ringförmiger Schnitt durch die Isolationsschicht nahe oder am äußeren Umfang des Innenrohrs erzeugt, der sich von dem freien Rohrende bis zum Trennschnitt an der vorgegebenen Länge erstreckt. Es entsteht eine zylindrische Hülse, die keine Verbindung zum Innenrohr mehr aufweist. Die Hülse kann nach dem Abziehen des Bohrmaschinenaufsatz problemlos abgezogen werden. Es entstehen kaum Sägespäne, so dass die Grube nicht mit Rückständen kontaminiert wird. Auch geht das Abtrennen im Vergleich zu dem manuellen Abschleifen sehr schnell und ohne Kraftaufwand.

Es ist in der Regel unvermeidbar, dass hartnäckige Rückstände auch bei dem Einsatz eines dicht über der äußeren Umfangsfläche verlaufenden Bohrmaschinenaufsatz an der Umfangsfläche haften bleiben. Diese müssen nachträglich vollständig entfernt werden.

Hier schlägt die Erfindung vor, dass die frei gelegte äußere Umfangsfläche des Innenrohrs durch eine Rotationsbürste von Rückständen der Isolationsschicht befreit wird. Eine solche Rotationsbürste ist in der parallelen Patentanmeldung der Anmelderin vom gleichen Tag beschrieben. Damit werden auch die restlichen Rückstände vollständig vom Rohrende entfernt. Auf das somit blanke Rohrende können die Rohrfittings problemlos dichtend aufgesetzt und fest mit dem Rohrende verbunden werden. Auch können die Rohrenden gut miteinander verschweißt werden.

Die Erfindung betrifft auch eine Vorrichtung zum Entfernen der Isolationsschicht von Fernwärmerohren mit einem Innenrohr insbesondere zum Durchführen des oben beschriebenen Verfahrens. Gemäß der Erfindung ist vorgesehen, dass die Vorrichtung einen hülsenförmigen Bohrmaschinenaufsatz aufweist, dessen Innendurchmesser geringfügig größer ist als der Außendurchmesser des Innenrohrs. Mit einem derartigen Bohrmaschinenaufsatz ist es möglich, einen ringförmigen Schnitt in der gewünschten Länge beziehungsweise Tiefe zu erzeugen, der das Innenrohr von der der dieses umgebenden Isolationsschicht trennt.

Auch wenn die Isolationsschicht aus Polyurethan besteht und somit an sich keinen Widerstand für den Bohrmaschinenaufsatz bildet, ist es zweckmäßig, wenn der Bohrmaschinenaufsatz an seinem freien Ende eine Verzahnung aufweist. Damit wird das relativ tiefe Eindringen des Bohrmaschinenaufsatz in das Isolationsmaterial erleichtert.

Aufgrund der Tiefe wird eine relativ große Menge der Isolationsschicht im Bereich des ringförmigen Schnitts zerspant. Die Bohrspäne können die Verzahnung relativ leicht zusetzten, so dass ein tieferes Eindringen nur mit erhöhtem Kraftaufwand oder gar nicht mehr möglich ist. Es müsste der Bohrmaschinenaufsatz während eines Schnitts mehrfach hin- und herbewegt werden, so dass die Späne ausgetragen werden können.

Gemäß der Erfindung ist daher vorgesehen, dass die Verzahnung eine Zahnhöhe von mindestens 10 mm und vorzugsweise zwischen 15 mm und 25 mm aufweist. Weiterhin ist es günstig, wenn die Verzahnung einen Zahnabstand von mindestens 10 mm und vorzugsweise zwischen 15 mm und 25 mm aufweist. Durch diese grobe Verzahnung ist ein tiefes Eindringen des Werkzeugs in die Isolationsschicht möglich.

Weiterhin ist es günstig, wenn die Zähne gegeneinander verschränkt verlaufen. Es kann auch vorgesehen werden, dass zumindest jeder zweite oder dritte Zahn der Verzahnung nach außen angewinkelt verläuft. Damit wird zum einen ein Verklemmen des Bohrmaschinenaufsatzes während des Schneidvorgangs verhindert. Zum anderen wird vermieden, dass sich die Spitzen der Verzahnung über die äußere Umfangsfläche bewegen und diese mit Riefen versehen, die sich auf eine spätere Dichtfläche negativ auswirken könnten.

Der Innendurchmesser der Bohrhülse bemisst sich nach dem äußeren Durchmesser des freizulegenden Innenrohrs. Es kann vorgesehen werden, dass der lichte Durchmesser des hülsenförmigen Bohrmaschinenaufsatzes 1,0 mm bis 5,0 mm größer ist als der Außendurchmesser des Innenrohrs. Damit schleift der Bohrmaschinenaufsatz nicht oder nur wenig über die äußere Umfangsfläche des Innenrohrs. Eine sichere und einfache Handhabung wird damit gewährleistet.

Da die Ausbildung und die Abmaße eines Fernwärmerohrs in der Regel standardisiert sind, sind die Außendurchmesser der Innenrohre vorbekannt. Je nach Durchflussmenge werden unterschiedlich große Innenrohre mit entsprechend unterschiedlichen Innen- und Außendurchmesser verwendet. Je nach Verwendung oder Leitungsabschnitt sind die Innerohre und somit deren Außendurchmesser in einem Leitungsnetz bekannt. Tatsächlich werden nur einige wenige unterschiedliche Innenrohre verbaut, so dass nur eine entsprechend geringe Anzahl von Bohrmaschinenaufsätzen bereitgehalten werden müssen.

Es kann beispielsweise ein Bearbeitungsset vorgesehen werden, das an die Größe eines bestimmten Gebiets, einer bestimmten Stadt oder einer Gemeinde angepasst ist. Es ist daher bei Arbeiten an einem Fernwärmerohr in der Regel ein passender hülsenförmiger Bohrmaschinenaufsatz vorhanden, mit dem die Isolationsschicht nahe vollständig entfernt werden kann. Ansonsten müsste der nächst größere Bohrmaschinenaufsatz gewählt werden. Die dann auf dem Rohrende verbleibende Schicht kann dann mit der Rotationsbürste entfernt werden.

Die Außendurchmesser solcher Fernwärmerohre betragen häufig zwischen 25 mm und 510 mm. Der hülsenförmige Bohrmaschinenaufsatz beziehungsweise der Innendurchmesser der Bohrhülse ist dementsprechend bemessen. Die Länge des für ein Rohrfitting freizulegenden Rohrendes hängt ebenfalls von dem Rohrdurchmesser ab und wird mit größer werdendem Durchmesser ebenfalls größer.

Es hat sich gezeigt, dass für kleinere Innenrohrdurchmesser von kleiner als 30 mm die Länge des freizulegenden Rohrendes 40 mm betragen soll. Bei Innenrohrdurchmessern bis 70 mm ist eine Länge von 60 mm zweckmäßig. Bei Innenrohrdurchmessern von bis zu 110 mm beträgt die Länge etwa 110 mm. Bei größeren Durchmessern wird die Länge noch größer.

Für die Fernwärmerohre beispielsweise einer Stadt kann ein Set mit folgenden Bohrmaschinenaufsätzen bereitgestellt werden:

| Innenrohr Außendurchmesser | Bohrmaschinenaufsatz Innendurchmesser | Länge mindestens |
|---|---|---|
| 23 mm | 24 mm | 40 mm |
| 29 mm | 30 mm | 40 mm |
| 36 mm | 37 mm | 60 mm |
| 44 mm | 45 mm | 60 mm |
| 50 mm | 51 mm | 60 mm |
| 62 mm | 63 mm | 60 mm |
| 78 mm | 79 mm | 105 mm |
| 91 mm | 92 mm | 105 mm |
| 116 mm | 117 mm | 105 mm |

Es ist zweckmäßig, wenn der hülsenförmige Bohrmaschinenaufsatz aus einem zu einer Hülse mit kreisrundem Querschnitt gebogenen Stahlblech besteht. Damit kann die gewünschte kreisrunde Hülsenform mit einfachen Mitteln hergestellt werden. Die sich gegenüberliegenden axialen Stirnflächen werden miteinander verbunden, beispielsweise verschweißt. Eine Bearbeitung der Schweißstellen oder Schweißnähte ist nur auf der Innenseite erforderlich, da dort ein Kontakt zur äußeren Umfangsfläche des Innenrohrs vermieden werden muss.

Eine solche Hülse ist zunächst an beiden Enden offen. Es kann auf der der Verzahnung abgekehrten Seite der Hülse eine kreisrunde Platte vorgesehen werden, damit die Hülse eine größere Formstabilität aufweist. An dieser Platte kann auch ein zentrischer Antriebszapfen angeordnet sein, der sich von der Verzahnung weg erstreckt. Dieser Zapfen ist so bemessen, dass er in das Bohrfutter einer handelsüblichen Bohrmaschine passt. Der Durchmesser des Antriebszapfens kann beispielsweise 8 mm, 10 mm oder 13 mm betragen.

Das Stahlblech kann eine Stärke von 0,5 mm bis 1,0 mm oder bis 3,0 mm aufweisen. Dadurch wird eine ausreichend formstabile Hülse gebildet. Stahlblech ist zudem ausreichend fest, so dass es problemlos in die relativ weiche Isolationsschicht eindringen kann.

Da das zu schneidende oder weg zu fräsende Material relativ weich ist und keinen großen Widerstand gegen eine zerspanende Bearbeitung leistet, reicht eine Handbohrmaschine in der Regel aus, um auch größere Bohrmaschinenaufsätze mit relativ großen Durchmessern anzutreiben. Es hat sich gezeigt, dass auch mit Akkumulatoren betriebene Bohrmaschinen ausreichen, den Bohrmaschinenaufsatz anzutreiben. Die Handhabung des Bohrmaschinenaufsatzes auf der Baustelle wird damit wesentlich erleichtert.

Das erfindungsgemäße Verfahren und die erfindungsgemäße Vorrichtung können auch dann eingesetzt werden, wenn in dem Fernwärmerohr mehrere Leitungsrohre oder Innenrohre parallel zueinander verlaufen und von einer gemeinsamen Isolationsschicht umgeben sind. Das Verfahren und die Vorrichtung wirken nur von der Stirnseite des Fernwärmerohrs, so dass sie stets eingesetzt werden können. Der nicht zugängliche Bereich zwischen den Rohren muss dann manuell entfernt werden. Die Leitungsrohre als solche sind jedoch entlang ihrem Umfang bereits freigelegt.

Die Erfindung wird im Folgenden anhand der schematischen Zeichnung näher erläutert. Es zeigen:
- Fig. 1: die Seitansicht auf einen Bohrmaschinenaufsatz gemäß der Erfindung,
- Fig. 2: die Frontansicht auf den Bormaschinenaufsatz gemäß Figur 1, und
- Fig. 3 a-c: den Verfahrensablauf gemäß der Erfindung.

Der in der Zeichnung dargestellte Bohrmaschinenaufsatz 11 weist eine hohlzylindrische Hülse 12 mit kreisrundem Querschnitt auf. Die Hülse 12 kann aus einem in eine kreisrunde Form gebogenen Stahlblech bestehen. An ihrem einen, in der Zeichnung rechten Ende 13 weist die Hülse 12 eine Verzahnung mit mehreren Zähnen 14, 15 auf, die entlang dem Umfang der Hülse 12 verlaufen. Die Zähne 14, 15 können durch Ausklinkungen des Stahlblechs gebildet werden.

An dem anderen Ende 16 ist die Hülse 12 durch eine kreisrunde Scheibe 17 verschlossen. An dieser Scheibe 17 ist ein Antriebszapfen 18 angeordnet, der sich von der Verzahnung 14, 15 weg erstreckt und konzentrisch zu der Mittenachse 19 verläuft. Der Antriebszapfen 18 passt in ein Bohrfutter einer nicht gezeigten Bohrmaschine, so dass der hülsenförmige Bohrmaschinenaufsatz 11 um seine Mittenachse 19 drehbar angetrieben werden kann.

Der Innendurchmesser der Hülse 12 ist so bemessen, dass sie über ein Innenrohr eines isolierten Fernwärmerohrs passt. Zum Abtrennen der Isolationsschicht wird die Hülse konzentrisch zum Rohr an dessen freies Ende angesetzt. Durch Drehen und Drücken der Hülse 12 arbeitet sich die Verzahnung 14, 15 immer weiter in die Isolationsschicht nahe dem Innenrohr hinein. Es wird ein ringförmiger Spalt gebildet, durch den die Isolationsschicht von dem Innenrohr getrennt wird. Die Hülse 12 wird bis zu der gewünschten Tiefe eingeführt. Dort ist die Isolationsschicht durch einen Schnitt senkrecht zur Rohrachse von dem übrigen Fernwärmerohr abgetrennt. Anschließend wird der hülsenförmige Bohrmaschinenaufsatz 11 vom Innenrohr abgezogen. Häufig wird dabei der abgetrennte und ringförmige Isolationsschicht mit abgezogen. Ansonsten kann sie nach dem Entfernen des Bohrmaschinenaufsatzes 11 leicht vom Innenrohr abgezogen werden.

Um ein Zusetzen der Verzahnung 14, 15 zu vermeiden sind die einzelnen Zähne relativ groß ausgebildet. Bei einem Innendurchmesser der Hülse 12 von beispielswiese 80 mm und einer Hülsenlänge von 110 mm kann die Zahnhöhe 15 mm und der Zahnabstand 12 mm betragen. Das Stahlblech kann eine Stärke von 1,0 mm aufweisen.

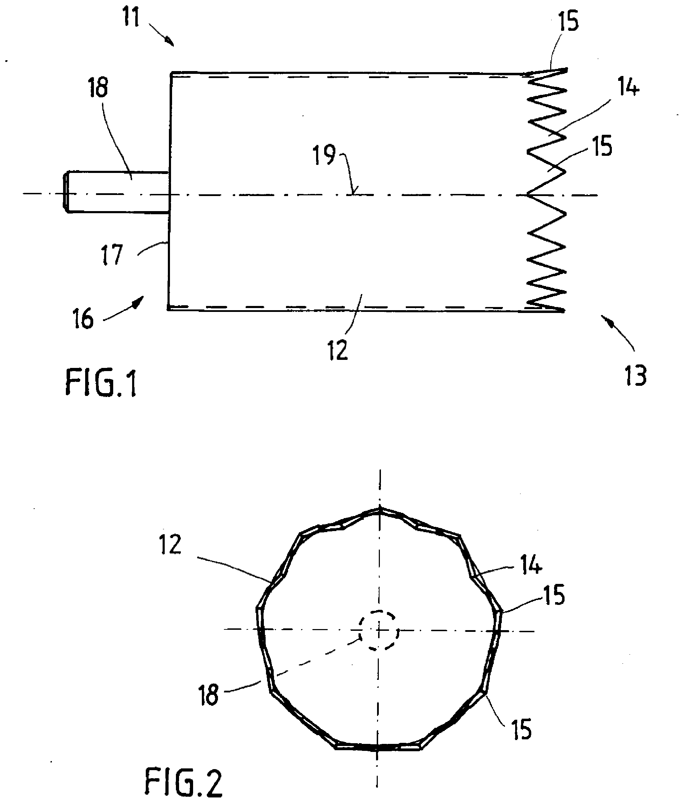

Weiterhin kann vorgesehen werden, dass die Zähne 14, 15 gegeneinander verschränkt verlaufen. Dabei verlaufen die einen Zähne 14 nach innen in Richtung auf die Mittenachse 19 abgewinkelt, während die benachbarten anderen Zähne 15 nach außen abgewinkelt zum Hülsenkörper verlaufen. Dies ist in der oberen Hälfte der Figur 2 dargestellt. Der lichte Innendurchmesser der Hülse 12 ist daher im Bereich der Verzahnung etwas kleiner. Der lichte Durchmesser ist dabei stets so bemessen, dass die Hülse 12 noch gut über das Innenrohr des Fernwärmerohr passt.

Es kann auch vorgesehen werden, dass nur jeder zweite Zahn nach außen abgewinkelt zum Hülsenkörper 12 verläuft. Auch damit wird ein Festsetzen des Bohrmaschinenaufsatzes 11 in dem ringförmigen Sägespalt zuverlässig verhindert, und der lichte Durchmesser der Hülse wird durch die Verzahnung nicht verkleinert. Dies ist in der unteren Hälfte der Figur 2 gezeigt.

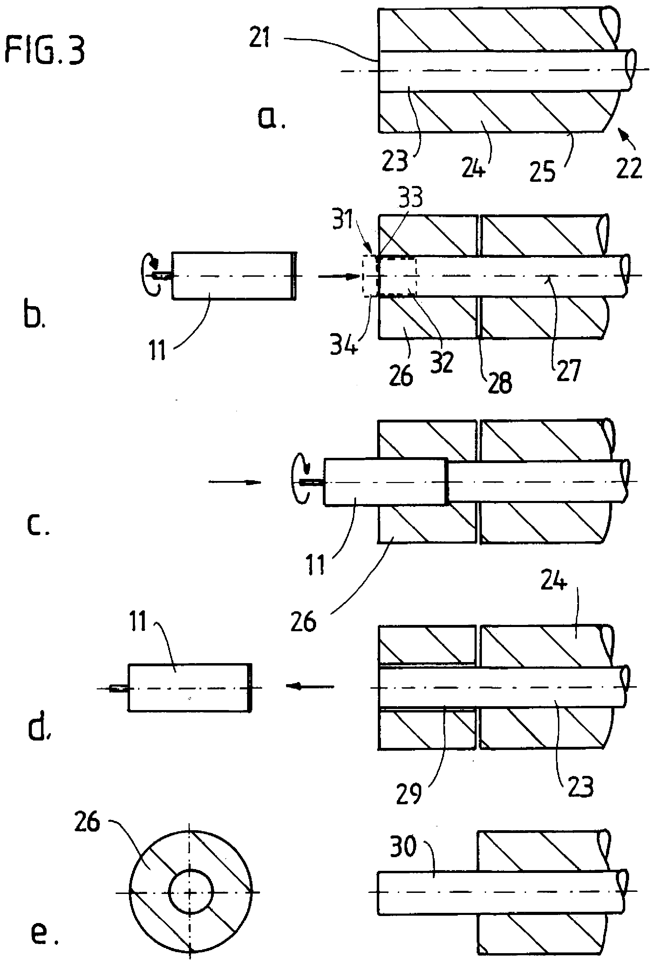

Das Verfahren zum Entfernen der Isolationsschicht von einem Fernwärmerohr wird anhand der Figur 3 erläutert. Ausgangspunkt ist eine freie Stirnfläche 21 des Fernwärmerohrs 22, das ein Innenrohr 23 und eine dieses umgebende und im Querschnitt ringförmige Isolationsschicht 24, beispielsweise aus Polyurethan, aufweist. Die Isolationsschicht 24 wird von einem Mantelrohr 25, beispielsweise aus Polyethylen, umhüllt. Insoweit ist der in Figur 3a dargestellte Aufbau eines Fernwärmerohrs bekannt und bedarf keiner weiteren Erläuterung.

In einem ersten Schritt gemäß Figur 3b wird der zu entfernende Isolationsschichtabschnitt 26 mit einem Schnitt senkrecht zur Rohrachse 27 entlang dem gesamten Umfang und bis zum Innenrohr 23 unter Belassung eines Spalts 28 eingeschnitten. Der Abstand des Spalts 28 zur freien Stirnfläche 21 bemisst sich nach den Anforderungen der mit dem freizulegenden Innenrohr 23 zu verbindenden Armatur oder dem anzubringenden Fitting. In dieser Lage gemäß Figur 3b sitzt der abzulösende Isolationsschichtabschnitt 26 noch fest auf dem Innenrohr.

Anschließend wird der Bohrmaschinenaufsatz 11 mit einer damit verbundenen Bohrmaschine oder einem anderen Werkzeug mit Drehantrieb auf die freie Stirnfläche konzentrisch zur Rohrachse 27 aufgesetzt. Der Innendurchmesser der Bohrhülse des Bohrmaschinenaufsatzes 11 ist vorher beispielsweise aus einem Set mit Bohrmaschinenaufsätzen derart ausgewählt worden, dass der Innendurchmesser der Bohrhülse dem Außendurchmesser des Innenrohrs 23 entspricht oder geringfügig größer ist.

Das erste Ansetzen des Bohrmaschinenaufsatzes 11 konzentrisch zur Rohrachse 27 ist wegen der üblicherweise ebenen freien Stirnfläche 21 und der beengten Raumverhältnisse in einer Baugrube mit einiger Geschicklichkeit verbunden. Um ein Abrutschen und eine Beschädigung des Bohrmaschinenaufsatzes zu vermeiden, kann gemäß der Erfindung eine Anordnung vorgesehen werden, die den Bohrmaschinenaufsatz 11 und einen Führungsstopfen 31 aufweist. Dieser ist nur in Figur 3b gestrichelt dargestellt. Der Führungsstopfen 31 ist im Querschnitt kreisrund ausgebildet und weist ein vorderes Führungsende 32 auf, dessen Außendurchmesser dem Innendurchmesser des Innenrohrs 23 entspricht, oder geringfügig, beispielsweise 0,5 mm bis 2,0 mm, kleiner ist. Über einen stufenförmigen Absatz 33 schließt sich in Richtung von dem Innenrohr 23 weg ein hinteres Führungsende 34 an, dessen Außendurchmesser dem Außendurchmesser des Innenrohrs 23 entspricht oder geringfügig, beispielsweise 0,5 mm bis 3,0 mm, größer ist. Insbesondere entspricht der Außendurchmesser des hinteren Führungsendes 34 dem lichten Innendurchmesser der Bohrhülse oder ist geringfügig, beispielsweise 0,5 mm bis 2,0 mm, kleiner.

Das in das Innenrohr 23 eintauchende vordere Führungsende 32 des Führungsstopfens 31 kann eine Länge von 50 mm bis 200 mm aufweisen. Das hintere Führungsende 34 des Führungstopfens 31 kann eine Länge von 10 mm bis 100 mm aufweisen. Insbesondere ist das aus dem Innenrohr 23 in der eingesetzten Gebrauchslage über die freie Stirnfläche 21 hervorstehende hintere Führungsende 34 des Führungstopfens 31 deutlich kürzer als die innere Länge der Bohrhülse, damit diese nach wie vor weit genug in die Isolationsschicht 24 eindringen kann. Andernfalls müsste der Bohrmaschinenaufsatz 11 vor dem Erreichen der gewünschten Eintauchtiefe herausgezogen und der Führungsstopfen 31 entfernt werden.

Vor dem Ansetzen des Bohrmaschinenaufsatzes 11 auf das Fernwärmerohr wird der Führungsstopfen 31 in das Innenrohr 23 eingeschoben. Dann kann der Bohrmaschinenaufsatz 11 sicher konzentrisch zu Rohrachse 27 angesetzt werden.

Durch die Drehung des Bohrmaschinenaufsatzes 11 und gleichzeitiger Kraftausübung in Richtung auf das Fernwärmerohr 22 wird der Bohrmaschinenaufsatz immer weiter in Richtung auf den Spalt 28 bewegt. Dies ist in Figur 3c dargestellt. Dabei erzeigt er einen ringförmigen Spalt 29 entlang dem äußeren Umfang des Innenrohrs 23.

Der Bohrmaschinenaufsatz 11 wird bis zu dem Spalt in die Isolationsschicht 24 bewegt. Anschließend wird der Bohrmaschinenaufsatz wieder aus dem ringförmigen Spalt 29 hinausgezogen. Der zu entfernende Isolationsschichtabschnitt 26 hat danach keine Verbindung mehr zu dem restlichen Fernwärmerohr 22. Dies ist Figur 3d dargestellt.

Anschließend kann der ringförmige Isolationsschichtabschnitt 26 einfach von dem Fernwärmerohr 22 abgenommen werden. Es kann auch vorkommen, dass dieser Isolationsschichtabschnitt 26 auf der Bohrhülse bei deren Abziehen hängenbleibt. Dann muss der Isolationsschichtabschnitt 26 von der Bohrhülse abgezogen werden. Es kann auch vorgesehen werden, dass der Schnitt senkrecht zur Rohrachse 27 erst nach dem Erzeugen des ringförmigen Trennspalts 29 an der gewünschten Länge des freizulegenden Innenrohrs 23 erfolgt. In jedem Fall liegen als Ergebnis des Verfahrens gemäß Figur 3e der entfernte ringförmige Isolationsschichtabschnitt 26 und das freigelegte Innenrohrende 30 vor. Dieses kann dann mit einer Rotationsbürste vollständig von eventuellen Rückständen des Isolationsmaterial befreit werden.

## Patentansprüche

1. Verfahren zum Entfernen der Isolationsschicht von Fernwärmerohren (22), welche Isolationsschicht wenigstens ein Innenrohr (23) umgibt, **dadurch gekennzeichnet, dass** die Isolationsschicht in einer vorgegebenen Länge von einer freien Stirnfläche (21) des Fernwärmerohrs (22) mit einem Schnitt (28) senkrecht zur Achse (29) des Fernwärmerohrs (22) von der restlichen Isolationsschicht abgetrennt wird, dass die Isolationsschicht ausgehend von der freien Stirnfläche (21) des Fernwärmerohrs (22) mit einem hülsenförmigen Bohrmaschinenaufsatz (11), dessen lichter Innendurchmesser geringfügig größer ist als der Außendurchmesser des Innenrohrs (23), von dem Innenrohr über die vorgegebene Länge getrennt wird, und dass der entstandene ringförmige Isolationsschichtabschnitt (26) von dem Innenrohr (23) abgezogen wird.

2. Verfahren nach Anspruch 1, **dadurch gekennzeichnet, dass** der Schnitt (28) senkrecht zur Achse (29) des Fernwärmerohrs nach dem Einsatz des Bohrmaschinenaufsatzes (11) erzeugt wird, um den Isolationsschichtabschnitt (26) von dem Innenrohr (23) zu trennen.

3. Verfahren nach Anspruch 1 oder 2, **dadurch gekennzeichnet, dass** die frei gelegte äußere Umfangsfläche des Innenrohrs durch eine Rotationsbürste von Rückständen der Isolationsschicht befreit wird.

4. Vorrichtung zum Entfernen der Isolationsschicht (24) von Fernwärmerohren (22) mit wenigstens einem Innenrohr (23), **dadurch gekennzeichnet, dass** die Vorrichtung einen hülsenförmigen Bohrmaschinenaufsatz (11) aufweist, dessen Innendurchmesser geringfügig größer ist als der Außendurchmesser des Innenrohrs (23).

5. Vorrichtung nach Anspruch 4, **dadurch gekennzeichnet, dass** der Bohrmaschinenaufsatz (11) an seinem freien Ende (13) eine Verzahnung (14, 15) aufweist.

6. Vorrichtung nach Anspruch 5, **dadurch gekennzeichnet, dass** die Verzahnung (14, 15) eine Zahnhöhe von mindestens 10 mm und vorzugsweise zwischen 15 mm und 25 mm aufweist.

7. Vorrichtung nach Anspruch 5 oder 6, **dadurch gekennzeichnet, dass** die Verzahnung (14, 15) einen Zahnabstand von mindestens 10 mm und vorzugsweise zwischen 15 mm und 25 mm aufweist.

8. Vorrichtung nach einem der Ansprüche 5 bis 7, **dadurch gekennzeichnet, dass** die Zähne (14, 15) gegeneinander verschränkt verlaufen.

9. Vorrichtung nach einem der Ansprüche 5 bis 7, **dadurch gekennzeichnet, dass** wenigstens ein Zahn (15) und insbesondere jeder zweite Zahn (15) der Verzahnung nach außen angewinkelt verläuft.

10. Vorrichtung nach einem der Ansprüche 4 bis 9, **dadurch gekennzeichnet, dass** der lichte Durchmesser des hülsenförmigen Bohrmaschinenaufsatz (11) 1,0 mm bis 5,0 mm größer ist als der Durchmesser des Innenrohrs.

11. Vorrichtung nach einem der Ansprüche 4 bis 10, **dadurch gekennzeichnet, dass** der hülsenförmige Bohrmaschinenaufsatz (11) aus einem zu einer Hülse mit kreisrundem Querschnitt gebogenen Stahlblech besteht.

12. Vorrichtung nach Anspruch 11, **dadurch gekennzeichnet, dass** das Blech eine Stärke von 0,5 mm bis 1,0 mm oder 1,0 bis 3,0 mm aufweist.
